# EUROPEAN PATENT SPECIFICATION

(11) **EP 4 287 356 B1**
(45) Date of publication and mention of the grant of the patent: **25.06.2025**
(21) Application number: 23175489.6
(22) Date of filing: 25.05.2023
(51) Int. Cl.: H01M 10/613, H01M 10/6569, H01M 10/62, H01M 10/625, H01M 10/653, H01M 10/6556, H01M 10/6567, H01M 10/6568

(54) **COMBINED THERMAL MANAGEMENT AND FIRE MITIGATION FOR LARGE SCALE BATTERY PACKAGES**
KOMBINIERTE WÄRMEVERWALTUNG UND BRANDABSCHWÄCHUNG FÜR GROSSFLÄCHIGE BATTERIEPACKS
GESTION THERMIQUE ET ATTÉNUATION D'INCENDIE COMBINÉES POUR BOÎTIERS DE BATTERIE À GRANDE ÉCHELLE

(30) Priority: 31.05.2022 US 202217828267
(43) Date of publication of application: 06.12.2023
(73) Proprietor: Kidde Technologies, Inc., Wilson, NC 27896 (US)
(72) Inventor: PAPAS, Paul, West Hartford (US); DARLING, Robert M., South Windsor (US); MACDONALD, Malcolm P., Bloomfield (US)
(74) Representative: Dehns

(56) References cited:
- EP-B1- 3 483 979
- WO-A1-2018/168276
- WO-A1-2019/093230
- CN-B- 110 753 822

## Description

### BACKGROUND

Exemplary embodiments pertain to the art of battery packages such as metal-ion battery packages, and in particular to thermal management of metal-ion battery packages. Large metal-ion battery packages, such as lithium-ion battery packages are seeing increased usage in aircraft applications. With increased use of such battery packages for aircraft, packaging designs are required for heat dissipation during normal operation as well as mitigation and fire containment during thermal runaway failures of the battery. Current thermal management, such as air cooling of the battery packages, is inadequate to address the reliability and fire safety requirements of the aviation industry. Once metal-ion battery fires form, mitigation using externally installed fire protection systems becomes prohibitively difficult.

WO 2018/168276 A1 and WO 2019/093230 Al disclose a heat exchanger configured such that heat can be exchanged between a target device and a working fluid.

### BRIEF DESCRIPTION

The present invention provides a battery system of an aircraft as claimed in claim 1.

In embodiments the inter-cell separator is formed from a thermally conductive material.

In embodiments the two or more coolant flow passages are each located at opposing sides of the battery package or cells.

In embodiments one or more suppressant nozzles are operably connected to the two or more coolant flow passages or reservoir tank.

In embodiments the one or more suppressant nozzles are configured to selectably emit the flow of coolant into the battery cells.

In embodiments a condenser heat exchanger is fluidly connected to the flow of coolant to condense the flow of coolant to saturated liquid.

In embodiments the condenser heat exchanger is a coolant to air heat exchanger.

In embodiments the flow of coolant changes phase from liquid to vapor phase in a range of 10 degrees to 45 degrees Celsius.

The present invention also provides, a method of managing thermal energy of a battery package of a vehicle as claimed in claim 9.

In embodiments the thermal energy is dissipated from the flow of coolant via a condenser heat exchanger.

In embodiments the condenser heat exchanger is a coolant to air heat exchanger.

In embodiments the flow of coolant changes phase from liquid to vapor in a range of 10 to 45 degrees Celsius.

In embodiments the flow of coolant is flowed through the one or more coolant passages via a pump.

In embodiments the inter-cell separator is formed from a thermally conductive material.

In embodiments one or more suppressant nozzles are operably connected to the one or more coolant flow passages.

In embodiments the one or more suppressant nozzles are configured to selectably emit the flow of coolant into the battery package region.

### BRIEF DESCRIPTION OF THE DRAWINGS

The following descriptions should not be considered limiting in any way. With reference to the accompanying drawings, like elements are numbered alike:
FIG. 1 is a schematic illustration of an embodiment of a battery system of a vehicle;
FIG. 2 is a schematic illustration of an embodiment of a cooling system of a battery package;
FIG. 3 is a schematic illustration of another embodiment of a cooling system of a battery package; and
FIG. 4 is a schematic illustration of yet another embodiment of a cooling system of a battery package.

### DETAILED DESCRIPTION

A detailed description of one or more embodiments of the disclosed apparatus and method are presented herein by way of exemplification and not limitation with reference to the Figures.

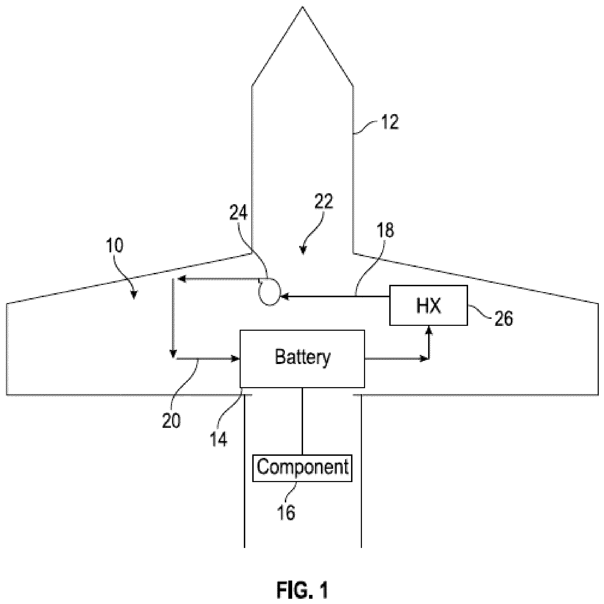

Referring now to FIG. 1, disclosed is an embodiment of a battery system 10 of, for example, an aircraft shown schematically at 12. While the embodiments are described herein in the context of the aircraft 12, one skilled in the art will readily appreciate that the battery system 10 may be utilized in other applications, such as ships, trucks, buses, trains or the like.

The battery system 10 includes one or more battery packages 14 operably connected to one or more aircraft components 16 to provide electrical power to the one or more aircraft components 16. Since, during operation, the one or more battery packages 14 generate heat, a thermal management system 18 is provided to cool the one or more battery packages 14. The cooling is provided via a two-phase flow of coolant 20 circulated through the one or more battery packages 14. The flow of coolant 20 is flowed through a coolant circuit 22 by a pump 24, which regulates pressure and directs the flow of coolant 20 into the one or more battery packages 14 as a saturated liquid. At the one or more battery packages 14, at least a portion of the flow of coolant 20 is vaporized by the transfer of thermal energy from the one or more battery packages 14 resulting in an increase in the overall vapor quality, which defines the proportions of the liquid and vapor phases in the mixture. The flow of coolant 20 exits the one or more battery packages 14 and proceeds through a condensing heat exchanger 26 where the thermal energy is dissipated to ambient and the flow of coolant 20 is condensed to a saturated liquid phase. In some embodiments, the condensing heat exchanger 26 is a two-phase coolant to air heat exchanger such as illustrated, while in other embodiments the condensing heat exchanger 26 is a two-phase coolant to liquid heat exchanger, in which the thermal energy is transferred to a secondary coolant flow. The liquid may be, for example, aircraft fuel or grey water from the aircraft cabin. One skilled in the art will readily appreciate that these are merely examples, and that other liquids may be utilized to exchange thermal energy with the flow of coolant 20.

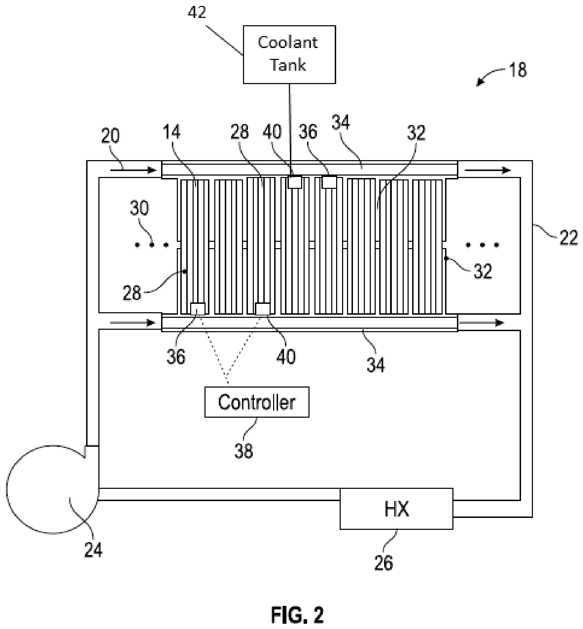

An embodiment of an exemplary battery package 14 and thermal management system 18 is illustrated in FIG. 2. The battery package 14 includes a plurality of battery cells 28 in an arrangement which is, in some embodiment, along a battery axis 30. While a linear arrangement of the battery cells 28 is illustrated in FIG. 2, one skilled in the art will readily appreciate that other arrangements of battery cells 28 may be utilized. Conductive inter-cell separators 32 are disposed between adjacent battery cells 28 of the plurality of battery cells 28. The inter-cell separators 32 are formed from a material with a high thermal conductivity such as, for example, an aluminum, brass or copper material or a polymer-based material or a metal coated polymer having a high thermal conductivity. According to claim 1, the inter-cell separators 32 are formed from a polymer with a metal coating such that the polymer inhibits thermal energy transfer between adjacent battery cells 28 and the metal coating provides for transfer of thermal energy toward the coolant passages 34. The inter-cell separators 32 are connected to coolant passages 34, which in some embodiments are located at lateral sides of the battery cells 28. The coolant passages 34 convey the flow of coolant 20 through the battery package 14 from the pump 22 toward the condensing heat exchanger 26. As shown in FIG. 2, in some embodiments the flow of coolant 20 in each of the coolant passages 34 is in the same direction, while in other embodiments the flow of coolant 20 in the coolant passages 34 is in opposing directions.

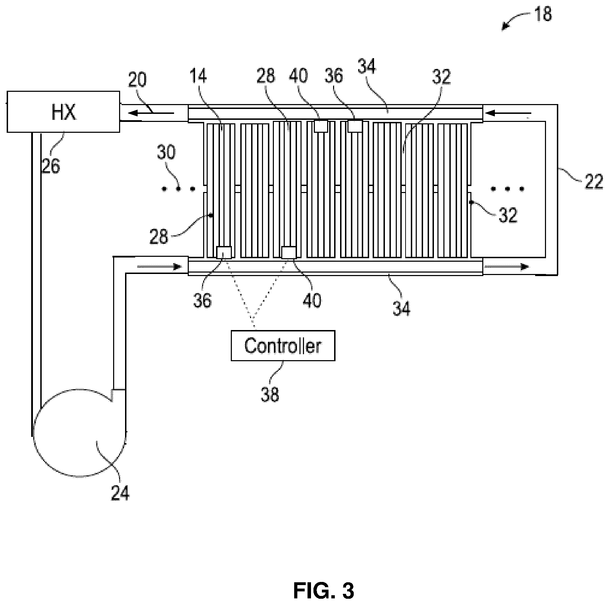

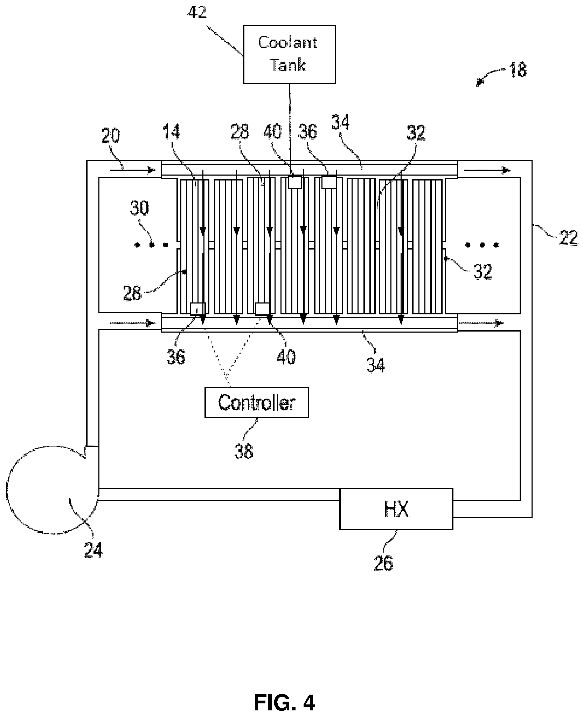

Referring to FIG. 3, in other embodiments the coolant passages 34 are arranged in series to increase heat transfer coefficients, in the event heat from a single pass is not sufficient to heat the flow of coolant 20 into a two-phase regime. In other embodiments, as illustrated in FIG. 4, the inter-cell separators 32 are configured such that the flow of coolant 20 is directed through the inter-cell separators 32 for additional thermal energy transfer.

Referring again to FIG. 2, the thermal management system 18 may also include one or more suppression nozzles 40 along the coolant passages 34 and one or more thermal sensors 36 disposed in the battery package 14. The nozzles 40, the pump 24 and the one or more thermal sensors 36 are connected to a cooling system controller 38. In response to temperatures of the battery cells 28 detected by the one or more thermal sensors 36, the controller 38 may command the pump 24 to deliver an increased mass flow of the flow of coolant 20 through the coolant passages 34. Additionally, if a runaway temperature of the battery cells 28 is detected, the controller 28 may command opening of the suppression nozzles 40 to emit or spray flow of coolant 20 or suppressant onto the battery cells 28 to stop the runaway temperature condition of the battery cells 28. In some embodiments, a coolant or suppressant reservoir 42 is connected to the suppression nozzles 40, and additional coolant or suppressant may be directed to the suppression nozzles 40 as needed to stop the runaway condition.

In some embodiments, the flow of coolant 20 is configured to have a saturation temperature above or below typical room temperature, in some embodiments in a range of 10 to 45 degrees Celsius. Examples of the flow of coolant 20 include low-pressure water, and low pressure low global warming potential (GWP) refrigerants such as R1233zd(E). Other refrigerants, such as R125, which are also fire suppressants, may be utilized. One skilled in the art will appreciate that these materials are merely exemplary and that other suitable coolants may be used. The phase change of the coolant 20 from liquid to vapor may occur at, for example, 40 degrees Celsius. Thus, in normal operating conditions of the battery package 14, the flow of coolant 20 may remain constant, and at a lower heat generation from operation of the battery package would produce relatively less vapor phase, while at a higher heat generation, as would occur during thermal runaway, a greater portion of the of the flow of coolant 20 is converted to the vapor phase (i.e., would produce a relatively higher vapor quality).

While in the description above, the thermal management system 18 is configured to cool the battery package 14, the thermal management system 18 may be operated as a heat pump to add thermal energy to the battery package 14 for operation in harsh environments where the ambient temperature may be sub-freezing.

The use of two-phase flow of coolant 20 allows for effective and efficient cooling of the battery packages 14, and may be combined with a suppression apparatus to prevent or mitigate thermal runaway of the battery packages 14.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A battery system (10) for an aircraft (12) comprising:
one or more battery packages (14), each battery package (14) including a plurality of battery cells (28);
a thermal management system (18) fluidly connected to the one or more battery packages (14), the thermal management system (18) having a flow of coolant (20) flowing therethrough;
wherein thermal energy is dissipated from the one or more battery packages (14) via a phase change of the flow of coolant (20); and
a condenser heat exchanger (26) fluidly connected to the flow of coolant (20) to condense the flow of coolant (20) to saturated liquid;
wherein the thermal management system (18) includes: a thermally conductive inter-cell separator (32) disposed between adjacent battery cells (28) of the plurality of battery cells (28); and two or more coolant flow passages (34) operably connected to the inter-cell separator (32);
wherein the inter-cell separator (32) is configured to conduct thermal energy from the plurality of battery cells (28) and transfer the thermal energy into the flow of coolant (20) flowing through the two or more coolant passages (34); and
**characterised in that** the inter-cell separator (32) is formed from a polymer with a metal coating such that the polymer inhibits thermal energy transfer between adjacent battery cells (28) and the metal coating provides for transfer of thermal energy toward the two or more coolant passages (34).

2. The battery system (10) of claim 1, wherein the inter-cell separator (32) is formed from a thermally conductive material.

3. The battery system (10) of claim 1 or 2, wherein the two or more coolant flow passages (34) are each located at opposing sides of the battery package (14) or cells (28).

4. The battery system (10) of claims 1 to 3, further comprising one or more suppressant nozzles (40) operably connected to the two or more coolant flow passages (34) or a reservoir tank.

5. The battery system (10) of claim 4, wherein the one or more suppressant nozzles (40) are configured to selectably emit the flow of coolant (20) into the battery cells (28).

6. The battery system (10) of any preceding claim, wherein the condenser heat exchanger (26) is a coolant to air heat exchanger.

7. The battery system (10) of any preceding claim, wherein the flow of coolant (20) changes phase from liquid to vapor phase in a range of 10 degrees to 45 degrees Celsius.

8. The battery system (10) of any preceding claim, wherein the flow of coolant (20) is one of low-pressure water, low pressure low global warming potential (GWP) refrigerant, refrigerant R1233zd(E) or R125.

9. A method of managing thermal energy of a battery package (14) of a vehicle, comprising:
conducting thermal energy from a plurality of battery cells (28) via a conductive inter-cell separator (32) disposed between adjacent battery cells (28) of the plurality of battery cells (28);
transferring the thermal energy from the inter-cell separator (32) to a flow of coolant (20) in thermal communication with the conductive inter-cell separator (32), thereby causing a phase change in the flow of coolant (20) resulting in cooling of the plurality of battery cells (28); and
dissipating the thermal energy from the flow of coolant (20);
wherein the flow of coolant (20) is flowed through one or more coolant passages (34) in thermal communication with the inter-cell separator (32);
**characterised in that** the inter-cell separator (32) is formed from a polymer with a metal coating such that the polymer inhibits thermal energy transfer between adjacent battery cells (28) and the metal coating provides for transfer of thermal energy toward the two or more coolant passages (34).

10. The method of claim 9, further comprising dissipating the thermal energy from the flow of coolant (20) via a condenser heat exchanger (26), and optionally wherein the condenser heat exchanger (26) is a coolant to air heat exchanger.

11. The method of claim 9 or 10, wherein the flow of coolant (20) is flowed through the one or more coolant passages (34) via a pump (24).

12. The method of claims 9 to 11, further comprising one or more suppressant nozzles (40) operably connected to the one or more coolant flow passages (34); wherein the one or more suppressant nozzles (40) are configured to selectably emit the flow of coolant (20) into a battery package (14) region.

## Patentansprüche

1. Batteriesystem (10) für ein Luftfahrzeug (12), umfassend:
einen oder mehrere Batteriepacks (14), wobei jeder Batteriepack (14) eine Vielzahl von Batteriezellen (28) beinhaltet;
ein Wärmeverwaltungssystem (18), das mit dem einen oder den mehreren Batteriepacks (14) in Fluidverbindung steht, wobei das Wärmeverwaltungssystem (18) von einem Kühlmittelstrom (20) durchströmt wird;
wobei Wärmeenergie von dem einen oder den mehreren Batteriepacks (14) über einen Phasenwechsel des Kühlmittelstroms (20) abgeführt wird; und
einen Kondensator-Wärmetauscher (26), der mit dem Kühlmittelstrom (20) in Fluidverbindung steht, um den Kühlmittelstrom (20) zu gesättigter Flüssigkeit zu kondensieren;
wobei das Wärmeverwaltungssystem (18) Folgendes beinhaltet:
einen wärmeleitfähigen Interzellenseparator (32), der zwischen benachbarten Batteriezellen (28) der Vielzahl von Batteriezellen (28) angeordnet ist; und zwei oder mehr Kühlmittelstromkanäle (34), die mit dem Interzellenseparator (32) wirkverbunden sind;
wobei der Interzellenseparator (32) dazu konfiguriert ist, Wärmeenergie aus der Vielzahl von Batteriezellen (28) zu leiten und die Wärmeenergie in den Kühlmittelstrom (20) zu übertragen, der durch die zwei oder mehr Kühlmittelkanäle (34) strömt; und
**dadurch gekennzeichnet, dass** der Interzellenseparator (32) aus einem Polymer mit einer Metallbeschichtung gebildet ist, sodass das Polymer die Übertragung von Wärmeenergie zwischen benachbarten Batteriezellen (28) hemmt und die Metallbeschichtung die Übertragung von Wärmeenergie in Richtung der zwei oder mehr Kühlmittelkanäle (34) bereitstellt.

2. Batteriesystem (10) nach Anspruch 1, wobei der Interzellenseparator (32) aus einem wärmeleitfähigen Material gebildet ist.

3. Batteriesystem (10) nach Anspruch 1 oder 2, wobei sich die zwei oder mehr Kühlmittelstromkanäle (34) jeweils an gegenüberliegenden Seiten des Batteriepacks (14) oder der Zellen (28) befinden.

4. Batteriesystem (10) nach Ansprüchen 1 bis 3, ferner umfassend eine oder mehrere Unterdrückungsmitteldüsen (40), die mit den zwei oder mehr Kühlmittelstromkanälen (34) oder einem Vorratstank wirkverbunden sind.

5. Batteriesystem (10) nach Anspruch 4, wobei die eine oder mehreren Unterdrückungsmitteldüsen (40) dazu konfiguriert sind, den Kühlmittelstrom (20) selektiv in die Batteriezellen (28) abzugeben.

6. Batteriesystem (10) nach einem der vorhergehenden Ansprüche, wobei der Kondensator-Wärmetauscher (26) ein Kühlmittel-Luft-Wärmetauscher ist.

7. Batteriesystem (10) nach einem der vorhergehenden Ansprüche, wobei der Kühlmittelstrom (20) in einem Bereich von 10 Grad bis 45 Grad Celsius einen Phasenwechsel von flüssiger zu gasförmiger Phase aufweist.

8. Batteriesystem (10) nach einem der vorhergehenden Ansprüche, wobei der Kühlmittelstrom (20) eines von Niederdruckwasser, Niederdruckkältemittel mit geringem Treibhauspotenzial (global warming potential - GWP), Kältemittel R1233zd(E) oder R125 ist.

9. Verfahren zum Verwalten von Wärmeenergie eines Batteriepacks (14) eines Fahrzeugs, umfassend:
Leiten von Wärmeenergie aus einer Vielzahl von Batteriezellen (28) über einen leitfähigen Interzellenseparator (32), der zwischen benachbarten Batteriezellen (28) der Vielzahl von Batteriezellen (28) angeordnet ist;
Übertragen der Wärmeenergie von dem Interzellenseparator (32) auf einen Kühlmittelstrom (20) in thermischer Verbindung mit dem leitfähigen Interzellenseparator (32), wodurch ein Phasenwechsel in dem Kühlmittelstrom (20) bewirkt wird, der zum Kühlen der Vielzahl von Batteriezellen (28) führt; und
Abführen der Wärmeenergie aus dem Kühlmittelstrom (20);
wobei der Kühlmittelstrom (20) durch einen oder mehrere Kühlmittelkanäle (34) in thermischer Verbindung mit dem Interzellenseparator (32) strömt;
**dadurch gekennzeichnet, dass** der Interzellenseparator (32) aus einem Polymer mit einer Metallbeschichtung gebildet ist, sodass das Polymer die Übertragung von Wärmeenergie zwischen benachbarten Batteriezellen (28) hemmt und die Metallbeschichtung die Übertragung von Wärmeenergie in Richtung der zwei oder mehr Kühlmittelkanäle (34) bereitstellt.

10. Verfahren nach Anspruch 9, ferner umfassend Abführen der Wärmeenergie aus dem Kühlmittelstrom (20) über einen Kondensator-Wärmetauscher (26), und wobei der Kondensator-Wärmetauscher (26) optional ein Kühlmittel-Luft-Wärmetauscher ist.

11. Verfahren nach Anspruch 9 oder 10, wobei der Kühlmittelstrom (20) über eine Pumpe (24) durch den einen oder die mehreren Kühlmittelkanäle (34) strömt.

12. Verfahren nach den Ansprüchen 9 bis 11, ferner umfassend eine oder mehrere Unterdrückungsmitteldüsen (40), die mit dem einen oder den mehreren Kühlmittelstromkanälen (34) wirkverbunden sind; wobei die eine oder mehreren Unterdrückungsmitteldüsen (40) dazu konfiguriert sind, den Kühlmittelstrom (20) selektiv in einen Bereich eines Batteriepacks (14) abzugeben.

## Revendications

1. Système de batterie (10) pour un aéronef (12), comprenant :
un ou plusieurs boîtiers de batteries (14), chaque boîtier de batteries (14) comprenant une pluralité de cellules de batterie (28) ;
un système de gestion thermique (18) relié fluidiquement aux un ou plusieurs boîtiers de batteries (14), le système de gestion thermique (18) étant traversé par un flux de liquide de refroidissement (20) ;
dans lequel l'énergie thermique est dissipée depuis les un ou plusieurs boîtiers de batteries (14) via un changement de phase du flux de liquide de refroidissement (20) ; et
un échangeur de chaleur à condenseur (26) relié fluidiquement au flux de liquide de refroidissement (20) pour condenser le flux de liquide de refroidissement (20) en liquide saturé ;
dans lequel le système de gestion thermique (18) comprend : un séparateur intercellulaire thermoconducteur (32) disposé entre des cellules de batterie adjacentes (28) de la pluralité de cellules de batterie (28) ; et deux passages d'écoulement de liquide de refroidissement ou plus (34) reliés de manière fonctionnelle au séparateur intercellulaire (32) ;
dans lequel le séparateur intercellulaire (32) est configuré pour conduire l'énergie thermique de la pluralité de cellules de batterie (28) et transférer l'énergie thermique dans le flux de liquide de refroidissement (20) circulant à travers les deux passages de liquide de refroidissement ou plus (34) ; et
**caractérisé en ce que** le séparateur intercellulaire (32) est formé d'un polymère avec un revêtement métallique de telle sorte que le polymère inhibe le transfert d'énergie thermique entre des cellules de batterie adjacentes (28) et le revêtement métallique assure le transfert d'énergie thermique vers les deux passages de liquide de refroidissement ou plus (34).

2. Système de batterie (10) selon la revendication 1, dans lequel le séparateur intercellulaire (32) est formé d'un matériau thermoconducteur.

3. Système de batterie (10) selon la revendication 1 ou 2, dans lequel les deux passages d'écoulement de liquide de refroidissement ou plus (34) sont chacun situés sur des côtés opposés du boîtier de batteries (14) ou des cellules (28).

4. Système de batterie (10) selon les revendications 1 à 3, comprenant également une ou plusieurs buses de suppression (40) reliées de manière fonctionnelle aux deux passages d'écoulement de liquide de refroidissement ou plus (34) ou à un réservoir.

5. Système de batterie (10) selon la revendication 4, dans lequel les une ou plusieurs buses de suppression (40) sont configurées pour émettre de manière sélective le flux de liquide de refroidissement (20) dans les cellules de batterie (28).

6. Système de batterie (10) selon une quelconque revendication précédente, dans lequel l'échangeur de chaleur à condenseur (26) est un échangeur de chaleur de liquide de refroidissement-air.

7. Système de batterie (10) selon une quelconque revendication précédente, dans lequel le flux de liquide de refroidissement (20) change de phase d'une phase liquide à vapeur dans une plage de 10 degrés à 45 degrés Celsius.

8. Système de batterie (10) selon une quelconque revendication précédente, dans lequel le flux de liquide de refroidissement (20) est constitué d'eau à basse pression, de réfrigérant à faible potentiel de réchauffement global (PRG) à basse pression, de réfrigérant R1233zd(E) ou R 125.

9. Procédé de gestion de l'énergie thermique d'un boîtier de batteries (14) d'un véhicule, comprenant :
la conduite d'énergie thermique d'une pluralité de cellules de batterie (28) via un séparateur intercellulaire conducteur (32) disposé entre des cellules de batterie adjacentes (28) de la pluralité de cellules de batterie (28) ;
le transfert de l'énergie thermique du séparateur intercellulaire (32) à un flux de liquide de refroidissement (20) en communication thermique avec le séparateur intercellulaire conducteur (32), provoquant ainsi un changement de phase dans le flux de liquide de refroidissement (20) entraînant le refroidissement de la pluralité de cellules de batterie (28) ; et
la dissipation de l'énergie thermique du flux de liquide de refroidissement (20) ;
dans lequel le flux de liquide de refroidissement (20) s'écoule à travers un ou plusieurs passages de liquide de refroidissement (34) en communication thermique avec le séparateur intercellulaire (32) ;
**caractérisé en ce que** le séparateur intercellulaire (32) est formé d'un polymère avec un revêtement métallique de telle sorte que le polymère inhibe le transfert d'énergie thermique entre des cellules de batterie adjacentes (28) et le revêtement métallique assure le transfert d'énergie thermique vers les deux passages de liquide de refroidissement ou plus (34).

10. Procédé selon la revendication 9, comprenant également la dissipation de l'énergie thermique provenant du flux de liquide de refroidissement (20) via un échangeur de chaleur à condenseur (26), et éventuellement dans lequel l'échangeur de chaleur à condenseur (26) est un échangeur de chaleur liquide de refroidissement-air.

11. Procédé selon la revendication 9 ou 10, dans lequel le flux de liquide de refroidissement (20) s'écoule à travers les un ou plusieurs passages de liquide de refroidissement (34) via une pompe (24).

12. Procédé selon les revendications 9 à 11, comprenant également une ou plusieurs buses de suppression (40) reliées de manière fonctionnelle aux un ou plusieurs passages d'écoulement de liquide de refroidissement (34) ; dans lequel les une ou plusieurs buses de suppression (40) sont configurées pour émettre de manière sélective le flux de liquide de refroidissement (20) dans une région de boîtier de batteries (14).
